# EUROPEAN PATENT SPECIFICATION

(11) **EP 2 792 551 B1**
(45) Date of publication and mention of the grant of the patent: **15.06.2016**
(21) Application number: 11877398.5
(22) Date of filing: 12.12.2011
(51) Int. Cl.: B60R 16/02, B60L 7/10, H02J 3/00, H02J 7/00, B60H 1/00, B60H 1/32

(54) **POWER CONSUMPTION PREDICTION DEVICE, VEHICLE CONTROL DEVICE, VEHICLE, POWER CONSUMPTION PREDICTION METHOD, AND VEHICLE CONTROL METHOD**
VORRICHTUNG ZUR VORHERSAGE EINES STROMVERBRAUCHS, FAHRZEUGSTEUERUNGSVORRICHTUNG, FAHRZEUG, VERFAHREN ZUR VORHERSAGE EINES STROMVERBRAUCHS UND FAHRZEUGSTEUERUNGSVERFAHREN
DISPOSITIF DE PRÉDICTION DE CONSOMMATION D'ÉLECTRICITÉ, DISPOSITIF DE GESTION D'UN VÉHICULE, VÉHICULE, PROCÉDÉ DE PRÉDICTION DE CONSOMMATION D'ÉLECTRICITÉ ET PROCÉDÉ DE GESTION D'UN VÉHICULE

(43) Date of publication of application: 22.10.2014
(73) Proprietor: Toyota Jidosha Kabushiki Kaisha, Toyota-shi, Aichi 471-8571 (JP)
(72) Inventor: MIYASHITA, Michihiro, Toyota-shi Aichi 471-8571 (JP); ITO, Koji, Toyota-shi Aichi 471-8571 (JP); UEKI, Nobukazu, Toyota-shi Aichi 471-8571 (JP); TOCHIGI, Kouhei, Toyota-shi Aichi 471-8571 (JP)
(74) Representative: TBK
(86) International application number: PCT/JP2011/006921
(87) International publication number: WO 2013/088464

(56) References cited:
- JP-A- 2000 142 274
- JP-A- 2001 054 176
- JP-A- 2003 111 201
- JP-A- 2004 176 624
- JP-A- 2005 067 293
- JP-A- 2010 269 712
- JP-A- 2011 163 281
- JP-A- 2011 178 209
- JP-A- 2011 229 353
- US-A1- 2002 084 769
- US-A1- 2002 157 414
- US-A1- 2006 042 285

## Description

### Technical Field

The present invention relates to a technology of predicting power consumption in a vehicle.

### Background Art

An automobile has an engine and a battery, wherein the battery is charged with power of the engine. A known technique of charge control for charging the battery suppresses the battery from being charged during normal running to save the amount of fuel consumption, while allowing the battery to be charged by regenerative power generation during deceleration running.

Idle reduction control is also known as the technology to save the amount of fuel consumption. Patent Literature 1 given below discloses an automobile having both the function of charge control and the function of idle reduction control, in order to meet the requirement for improvement of fuel consumption.

In the above prior art, however, when the amount of electric power accumulated in the battery is consumed by auxiliary machinery during an engine stop by idle reduction control, the engine may be restarted due to shortage of SOC (state of charge). Herein "SOC" is an index indicating how much electric power remains in the battery. Among the auxiliary machinery, especially air conditioner consumes a large amount of power. Prediction of the power consumption by the air conditioner is accordingly of great importance. A known technique estimates the amount of power consumption of an air compressor during engine stop, based on the ambient temperature, the vehicle interior temperature, the set temperature of an air conditioner, and the amount of solar radiation (for example, Patent Literature 3).

### Citation List

### Patent literature

PTL1: JP2005-67293 A
PTL2: JP2011-163281 A
PTL 3: JP 2004-176624A

Document US2002/084769 A1 discloses an air conditioner for a hybrid vehicle, wherein, when a residual charging degree of a battery becomes equal to or lower than a target degree, the electrical motor generator is driven by a vehicle engine so that the battery is charged through the electrical motor generator. When the engine is driven, the target degree of the battery is set higher than that when the engine is stopped so that a charging operation tends to be required while the engine is driven.

Document US2006/042285 A1 discloses a stationary vehicle air conditioning system with a refrigerant circuit, in which at least one compressor circulates the refrigerant to at least two condensers. The at least one compressor may be powered by the vehicle's mechanical power, by an electrical source, or by a combination of these driving forces. Depending on desired operating characteristics, the condensers may be arranged in a series or parallel configuration. A second compressor also may be added, which second compressor may be powered by a source other than the mechanical energy of the vehicle's engine.

Document JP 2011 178209 (A) discloses a power consumption prediction apparatus for a vehicle equipped with a battery.

Document JP 2010 269712 (A) discloses a control device for a vehicle including a traffic congestion prediction means for predicting the existence of traffic congestion on an advancement route. When a traffic congestion is predicted, a charging amount of a battery of the vehicle is set higher as compared with the case that the traffic congestion is not predicted.

Document JP 2000 142274 A discloses a control device for a vehicle, wherein seat sensors are provided for every seat.

### SUMMARY OF INVENTION

### Technical Problem

The prior art technique, however, does not sufficiently consider the effect of the count of passengers in the vehicle on the power consumption by the air conditioner.

In order to solve at least part of the problems described above, an object of the invention is to improve the accuracy of prediction of power consumption by the air conditioner and improve fuel consumption of the vehicle by taking into account the count of passengers.

### Solution to Problem

The invention may be implemented by any of the following embodiments or aspects, in order to solve at least part of the above problems.

### [Aspect 1]

A vehicle control device of a vehicle, the vehicle comprising an engine, a battery chargeable with electric power generated by a generator driven with power of the engine, and two or more air conditioner units operable with electric power of the battery, the vehicle control device comprising:
a power consumption prediction device that predicts an amount of electric power consumed by a vehicle;
an idle reduction controller that performs idle reduction control of the engine;
an SOC detector that detects a state of charge (SOC) of the battery;
a power amount setter that sets during running of the vehicle an amount of power for idle reduction, which is predicted to be used during a stop and start period from an engine stop to an engine restart by the idle reduction control, based on the power consumption of the air conditioner units predicted by the power consumption prediction device; and
an SOC controller that controls charging of the battery with the electric power of the generator during running of the vehicle to prevent a remaining amount of power as a difference between the SOC detected by the SOC detector and a lower limit of an available SOC range from decreasing below the amount of power for idle direction; wherein
the power consumption prediction device comprising:
a passenger count detector that detects count of passengers in the vehicle;
an active air conditioner unit count detector that detects a count of active air conditioner units in the vehicle;
a vehicle interior temperature detector that detects a vehicle interior temperature of the vehicle;
an air conditioner unit set temperature acquirer that obtains a set temperature of each of the air conditioner units; and
a power consumption predictor that predicts power consumption of the air conditioner units during idle reduction of the engine, the predicting power consumption being performed when the vehicle is running prior to the idle reduction, by using the count of passengers, the count of active air conditioner units, the vehicle interior temperature and the set temperature of each air conditioner unit; wherein
the SOC controller is configured to:
(a) calculate a level of a vehicle state based on the predicted power consumption of the vehicle;
(b) calculate a driving environment index using at least one of:
   (i) a calculated vehicle stop time rate of the vehicle during a predetermined latest time period; and
   (ii) at least one of a vehicle average speed, an acceleration and a frequency of gearshifts of a transmission; and
(c) calculate an SOC target value using the level of the vehicle state and the driving environment index to control charging of the battery with the electric power of the generator.

In general, humans are heat-generating bodies, so that the power consumption by the air conditioner units differs depending on the count of passengers. This aspect predicts the power consumption by the air conditioner units based on the count of passengers in the vehicle, thus improving the accuracy of prediction of the power consumption in the vehicle.

Moreover, this aspect controls charging of the battery with the electric power of the generator during running of the vehicle to prevent the remaining amount of power as the difference between the SOC detected by the SOC detector and the lower limit of the available SOC range from decreasing below the amount of power for idle reduction,. This suppresses an engine restart due to shortage of SOC in the middle of the stop and start period. The case of increasing the SOC with an increase in power during engine operation has the higher fuel consumption effect per unit SOC (for example, 1% SOC) than the case of an engine restart due to shortage of SOC in the middle of the stop and start period. This accordingly improves fuel consumption of the vehicle.

### [Aspect 2]

The vehicle control device according to Aspect 1, wherein
the passenger count detector uses a seat sensor provided in each seat of the vehicle to detect the count of passengers.
The vehicle generally has a seat sensor and a seatbelt sensor to detect that a seatbelt is fastened. This aspect detects the count of passengers without providing any additional sensor.

### [Aspect 3]

The vehicle control device according to Aspect 2, wherein
the seat sensor is a seatbelt sensor provided in the seat.
The vehicle generally has a seat sensor and a seatbelt sensor to detect that a seatbelt is fastened. This aspect detects the count of passengers without providing any additional sensor.

### [Aspect 4]

The vehicle control device according to Aspect 1, wherein
the vehicle has an imaging device, and
the passenger count detector uses an image taken by the imaging device to detect the count of passengers.
This aspect detects the count of passengers using the image taken by the imaging device and causes the count of passengers to be detected accurately even in the case that baggage is placed on the seat.

### [Aspect 5]

The vehicle control device according to either Aspect 2 or Aspect 3, further comprising:
an air conditioner unit controller that identifies a passenger position using the seat sensor and controls on and off of each of the air conditioner units based on the passenger position.

This aspect switches on and off each air conditioner unit based on the passenger position in the vehicle and detects the count of active air conditioner units based on the switching on and off.

### [Aspect 6]

The vehicle control device according to any one of Aspects 1 to 5, wherein
the active air conditioner unit count detector that detects the count of active air conditioner units using a switch-on count and a switch-off count of the air conditioner units.
This aspect detects the count of active air conditioner units and predicts the power consumption by the air conditioner units. This improves the accuracy of prediction of the power consumption in the vehicle.

### [Aspect 7]

The vehicle control device according to Aspect 1, further comprising:
a regenerative power amount predictor that predicts an amount of regenerative electric power regenerated during deceleration from a running state of the vehicle to a stop state, wherein
the SOC controller controls charging of the battery with the electric power of the generator to prevent a total amount of power as a sum of the remaining amount of power during running and the amount of regenerative electric power from decreasing below the amount of power for idle reduction.
This aspect reduces the remaining amount of power by an amount of electric power charged by regeneration, thus extending the battery life.

### [Aspect 8]

The vehicle control device according to either of Aspect 1 or Aspect 7, wherein
the power amount setter comprises a driving environment predictor that predicts a driving environment of the vehicle that causes the vehicle to stop, and
the power amount setter sets the amount of power for idle reduction, based on the predicted driving environment.
This aspect causes the amount of power for idle reduction predicted to be used during the stop and start period to be estimated with high accuracy according to the driving environment. This enhances the reliability of improvement in fuel consumption.

### [Aspect 9]

A vehicle, comprising:
an engine;
a battery that is chargeable with an amount of power generation by a generator driven with power of the engine; and
the vehicle control device according to any one of Aspects 1 to 7.

### [Aspect 10]

A vehicle control method of controlling a vehicle, the vehicle comprising an engine, a battery chargeable with electric power generated by a generator driven with power of the engine, and two or more air conditioner units operable with electric power of the battery, the vehicle control method comprising:
(a) predicting an amount of electric power consumed by the vehicle;
(b) performing idle reduction control;
(c) detecting a state of charge of the battery;
(d) predicting an amount of power consumed by the air conditioner units during idle reduction of engine as an amount of power for idle reduction, the predicting the amount of power consumption being performed when the vehicle is running, using a result of the (a); and
(e) controlling charging of the battery with the electric power of the generator during running of the vehicle to prevent a remaining amount of power as a difference between the SOC detected in (c) and a lower limit of an available SOC range from decreasing below the amount of power for idle direction; wherein
the (a) comprising:
(a-1) detecting a count of passengers in the vehicle;
(a-2) detecting a count of active air conditioner units in the vehicle;
(a-3) detecting a vehicle interior temperature of the vehicle;
(a-4) obtaining a set temperature of each of the air conditioner units; and
(a-5) predicting power consumption of the air conditioner units during idle reduction of the engine, the predicting power consumption being performed when the vehicle is running prior to the idle reduction, by using the count of passengers, the count of active air conditioner units, the vehicle interior temperature and the set temperature of each air conditioner unit; wherein
the (e) comprising:
(e-1) calculating a level of a vehicle state based on the predicted power consumption of the vehicle;
(e-2) calculating a driving environment index using at least one of:
   (i) a calculated vehicle stop time rate of the vehicle during a predetermined latest time; and
   (ii) at least one of a vehicle average speed, an acceleration and a frequency of gearshifts of a transmission; and
(e-3) calculating an SOC target value using the level of the vehicle state and the driving environment index to control charging of the battery with the electric power of the generator.

The invention may be implemented by any of various aspects: for example, a control system including the vehicle control device according to any of Aspects 1 to 8; a computer program that causes a computer to implement functions corresponding to the respective steps of the vehicle control method according to Aspect 10; and a non-transitory storage medium in which the computer program is stored.

### Brief Description of Drawings

Fig. 1 is a diagram illustrating the configuration of an automobile 200 according to an embodiment of the invention.
Fig. 2 is a diagram illustrating the functional configuration of the ECU 50.
Fig. 3 is a flowchart showing a target SOC estimation routine.
Fig. 4A and 4B are diagrams schematically illustrating the target SOC.
Fig. 5 is a diagram showing a flowchart of correcting the vehicle state P2 based on the temperature difference between the vehicle interior temperature and the set temperature of the air conditioner 74.
Fig. 6 is a diagram showing a flowchart of correcting the vehicle state P2 based on the count of passengers.
Fig. 7 is a diagram illustrating the SOC distribution request level calculation map MP
Fig. 8 is a diagram illustrating the target SOC value calculation table TB.
Fig. 9 is a diagram illustrating time charts of vehicle speed and SOC during operation of the automobile.
Fig. 10 is a diagram illustrating the effect of increasing the capacity for idle reduction.

### DESCRIPTION OF EMBODIMENTS

Some aspects of the invention are described below with reference to embodiments in the following sequence:
A. General Configuration
B. Configuration of ECU
C. Configuration of Target SOC Estimator
D. Operation and Effects
E. Modifications

### A. General Configuration

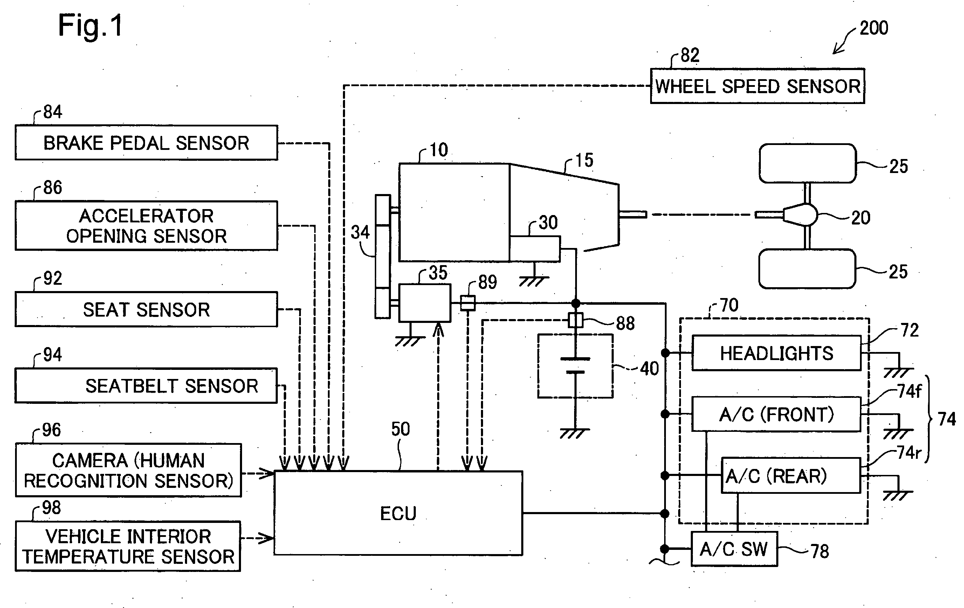

Fig. 1 is a diagram illustrating the configuration of an automobile 200 according to an embodiment of the invention. The automobile 200 is a vehicle having idle reduction function. The automobile 200 includes an engine 10, an automatic transmission 15, a differential gear 20, drive wheels 25, a starter 30, an alternator 35, a battery 40 and an electronic control unit (ECU) 50.

The engine 10 is an internal combustion engine that generates power by combustion of a fuel such as gasoline or light oil. The power of the engine 100 is transmitted to the automatic transmission 15, while being transmitted to the alternator 35 via a drive mechanism 34. The output of the engine 10 is changed by an engine control computer (not shown) according to the pressure of an accelerator pedal (not shown) stepped on by the driver.

The automatic transmission 15 automatically changes the gear ratio (so-called gear shifting). The power (rotation speed·torque) of the engine 10 is subjected to gear shifting by the automatic transmission 15 and is transmitted as a desired rotation speed·torque via the differential gear 20 to the left and right drive wheels 25. The power of the engine 10 is changed according to the accelerator pedal pressure and is transmitted via the automatic transmission 15 to the drive wheels 25 to accelerate or decelerate the vehicle (automobile 200).

This embodiment employs a belt drive configuration as the drive mechanism 34 transmitting the power of the engine 10 to the alternator 35. The alternator 35 uses part of the power of the engine 10 to generate electric power. The generated electric power is used to charge the battery 40 via an inverter (not shown). In the description hereof, power generation by the alternator 35 using the power of the engine 10 is called "fuel power generation". The alternator 35 corresponds to the " generator " described in "Solution to Problem" The alternator 35 is connected to the drive wheels 25 via the drive mechanism 34, the engine 10, the automatic transmission 15 and the differential gear 20. During deceleration, the rotational motion of the drive wheels 25 is transmitted to drive the alternator 35 via the differential gear 20, the automatic transmission 15, the engine 10 and the drive mechanism 34, so that the kinetic energy of the vehicle is regenerated as electrical energy.

The battery 40 is a lead acid battery serving as a DC power source for a voltage of 14 V and supplies electric power to peripheral devices provided other than the engine main body. In the description hereof, the peripheral devices provided other than the engine main body and operated with electric power of the battery 40 are called "auxiliary machines". The group of auxiliary machines is called "auxiliary machinery". The automobile 200 includes, for example, head lights 72 and an air conditioner (A/C) 74 as the auxiliary machinery 70. According to the embodiment, the air conditioner 74 includes two air conditioner units, i.e., a front air conditioner unit 74f and a rear air conditioner unit 74r, which are independently switched on and off by an air conditioner switch 78. In the description, the front air conditioner unit 74f and the rear air conditioner unit 74r are collectively called the air conditioner 74 when there is no need of discrimination. An air conditioner unit for the front passenger seat may be provided, in addition to the front air conditioner unit 74f and the rear air conditioner unit 74r. In this application, the air conditioner 74 includes three air conditioner units. When the front air conditioner unit 74f is switched on, the ECU 50 may be configured to control the air conditioner switch 78 to switch on the rear air conditioner unit 74r, for example, in response to a signal from a seat sensor 90 described later. The air conditioner switch 78 is also used to set a temperature (target temperature) of each air conditioner unit 74. The count of active air conditioner units in the claims denotes the count of air conditioner units switched on by this air conditioner switch 78.

The starter 30 is a starter moter to start the engine 10 with electric power supplied from the battery 40. In general, when the driver operates an ignition switch (not shown) to start driving an automobile at a stop, the starter 30 is activated to start the engine 10. This starter 30 is used to restart the engine 10 in the no idling state as described later. In the description hereof, the no idling state means the engine stop state by idle reduction control.

The ECU 50 includes a CPU that performs computer programs, a ROM that stores computer programs and others, a RAM that temporarily stores data and input/ output ports connected with, for example, various sensors and actuators. The sensors connected with the ECU 50 include: a wheel speed sensor 82 that detects the rotation speed of the drive wheels 25; a brake pedal sensor 84 that detects depression or non-depression of a brake pedal (not shown); an accelerator opening sensor 86 that detects the pressure of an accelerator pedal (not shown) as an accelerator opening; a battery current sensor 88 that detects the charge-discharge current of the battery 40; an alternator current sensor 89 that detects the output current of the alternator 35; a seat sensor 92 that detects whether a passenger is seated on a seat; a seatbelt sensor 94 that detects whether a seatbelt is fastened or unfastened; a camera 96 serving as a human recognition sensor; and a vehicle interior temperature sensor 98 that measures the vehicle interior temperature. The seat sensor 92 detects the pressure applied when a passenger is seated on a seat and thereby determines whether a passenger is seated on the seat. The seatbelt sensor 94 determines whether an anchor of the seatbelt is inserted in a buckle. The camera 96 photographs a passenger seated on a seat and recognizes the presence of the passenger, for example, by face recognition. The actuators include the starter 30 and the alternator 35. The ECU 50 receives the supply of electric power from the battery 40.

The ECU 50 controls the starter 30 and the alternator 35 based on signals from the various sensors mentioned above and an engine control computer (not shown), so as to control engine stops and restarts (idle reduction control) and control the SOC (State of Charge) of the battery 40. Herein "SOC" is an index expressed by the charging rate of the battery 40, where the full charge state of the battery 40 is expressed as 100% and the vacant state of the battery 40 is expressed as 0%. Because the battery 40 is likely to deteriorate when kept in the full charge state, it is accordingly preferable to perform charge control of the battery 40 to set the SOC in a predetermined range. This ECU 50 is the vehicle control device directly involved in the invention.

### B. Configuration of ECU

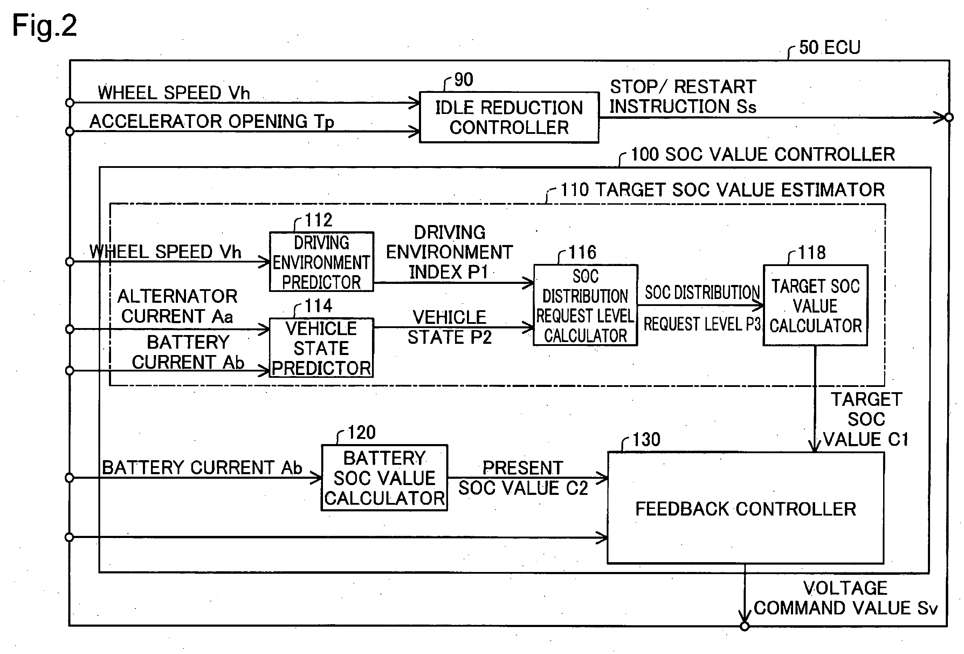

Fig. 2 is a diagram illustrating the functional configuration of the ECU 50. As illustrated, the ECU 50 includes an idle reduction controller 90 and an SOC value controller 100. The functions of the idle reduction controller 90 and the SOC value controller 100 are actually implemented by the CPU included in the ECU 50 executing the computer programs stored in the ROM.

The idle reduction controller 90 obtains a wheel speed Vh detected by the wheel speed sensor 82 and an accelerator opening Tp detected by the accelerator opening sensor 86 and outputs an instruction Ss to stop/ start the engine 10 to the starter 30. More specifically, the idle reduction controller 90 determines that an engine stop condition is satisfied and outputs an engine stop instruction Ss to the starter 30, when the wheel speed Vh is reduced below a predetermined speed (for example, 10 km/h). The idle reduction controller 90 determines that an engine restart condition is satisfied and outputs an engine restart instruction Ss to the starter 30, when depression of the accelerator pedal is subsequently detected based on the accelerator opening Tp.

In other words, the idle reduction controller 90 stops the engine 10 when the engine stop condition is satisfied, and restarts the engine 10 when the engine restart condition is satisfied after the engine stop. The engine stop condition and the engine restart condition are not limited to those described above. For example, the engine stop condition may be that the wheel speed Vh is fully reduced to 0 km/h, and the engine restart condition may be that the driver releases the brake pedal.

The SOC value controller 100 includes a target SOC value estimator 110, a battery SOC value calculator 120 and a feedback controller 130. The target SOC value estimator 110 estimates an SOC expected to be used during a time period from an engine stop to an engine restart (hereinafter called "stop and start period") by idle reduction control during vehicle running (for example, when the wheel speed Vh> 0 km/h), as a target SOC (hereinafter also called "target SOC value") C1. The detailed configuration will be described in Chapter C. This target SOC value estimator 110 corresponds to the "power amount setting section" described in "Solution to Problem". The "SOC" herein is defined as a value obtained by dividing the electric charge remaining in the battery by the electric charge accumulated in the battery in the fully charged state.

The battery SOC value calculator 120 calculates a current SOC (hereinafter called "present SOC value") C2 of the battery 40, based on charge-discharge current (called "battery current") Ab of the battery 40 detected by the battery current sensor 88. More specifically, the battery SOC value calculator 120 calculates the present SOC value C2 by integrating the charge-discharge currents Ab with setting the charge currents of the battery 40 to positive values and setting the discharge currents of the battery 40 to negative values. The configuration of the battery current sensor 88 and the battery SOC value calculator 120 corresponds to the "SOC detector" described in [Solution to Problem]. The SOC detector is not necessarily limited to the configuration that makes a calculation based on the battery current detected by the battery current sensor 88 but may be configured to make a calculation based on, for example, a battery electrolytic solution specific gravity sensor, a cell voltage sensor or a battery terminal voltage sensor. Moreover, the SOC detector is not necessarily limited to the configuration that detects the electric charge remaining in the battery but may be configured to detect the state of charge using another parameter, for example, a chargeable amount.

The feedback controller 130 calculates a difference by subtracting the present SOC value C2 from the target SOC value C1 during vehicle running and determines a voltage command value Sv that makes the calculated difference equal to a value 0 by feedback control. This voltage command value Sv indicates the amount of power to be generated by the alternator 35 and is sent to the alternator 35. As a result, the present SOC value C2 is controlled to the target SOC value C1 by fuel power generation. The configuration of the feedback controller 130 corresponds to the "remaining capacity controller" described in "Solution to Problem".

The SOC value controller 100 has a function called "battery control" and a function called "charge control", in addition to the above functions, although not specifically illustrated. The following describes battery control. The battery or more specifically the lead acid battery of the embodiment has a predetermined available SOC range (operable SOC range) based on the need for prolonged life. Accordingly, the "battery control" is performed to increase the power of the engine 10 and thereby increase the SOC into the above SOC range when the SOC of the battery 40 becomes lower than a lower limit (for example, 60%) of this SOC range and to consume the SOC and thereby decrease the SOC into the above SOC range when the SOC exceeds an upper limit (for example, 90%) of the SOC range. When the SOC becomes lower than the lower limit during an engine stop by idle reduction control, the engine is restarted to increase the SOC into the above SOC range by fuel power generation.

The "charge control" is a control process that suppresses the battery from being charged by fuel power generation during normal running to save fuel consumption and charges the battery by regenerative power generation during deceleration running. The charge control is a known configuration and is thus not specifically described here, but basically performs the following operations. In the charge control, feedback control by the feedback controller 130 during normal running is performed when the target SOC value C1 is greater than the present SOC value C2; a specified power generation cutoff voltage is set to the voltage command value Sv, which is given to the alternator 35, when the target SOC value C1 is equal to or less than the present SOC value C2. This configuration suppresses charging during normal running and saves fuel consumption. The "normal running" herein denotes the state of the automobile 200 other than "vehicle stop" when the vehicle speed is 0 km/h and "deceleration running" when the regenerative power generation described above is performed.

### C. Configuration of Target SOC Estimator

The target SOC value estimator 110 includes a driving environment predictor 112, a vehicle state predictor 114, an SOC distribution request level calculator 116 and a target SOC value calculator 118.

The driving environment predictor 112 predicts the driving environment. The "driving environment" herein is a parameter indicating the extent that the vehicle falls in idle reduction state in the future (from now) and, in other words, a parameter regarding the ratio of a stop and start period in a future predetermined period. The "driving environment" accordingly means the driving environment of the vehicle that causes a vehicle stop by idle reduction control. The driving environment predictor 112 calculates a driving environmental index, which indicates the driving environment by an index, based on a wheel speed Vh detected by the wheel speed sensor 82. More specifically, the driving environment predictor 112 calculates a ratio R of vehicle stop time in a last predetermined period (for example, in last 10 minutes) going back from the present based on the wheel speed Vh and calculates a driving environment index P1 from this calculated ratio R. A concrete procedure counts the total vehicle stop time when the wheel speed Vh is equal to a value 0 in a predetermined period, divides the total vehicle stop time by the total time of the predetermined period to calculate the ratio R and calculates the driving environment index P1 from the ratio R.

The high ratio R indicates a high frequency of vehicle stops and a long vehicle stop time and thereby leads to prediction of a high frequency of future vehicle stops and a long future vehicle stop time. This embodiment accordingly determines the driving environment index P1 as follows:
* When the ratio R of vehicle stop time in 10 minutes < 38%, the driving environment index P1 is set to a value 1;
* When 38% ≤ the ratio R of vehicle stop time in 10 minutes < 42%, the driving environment index P1 is set to a value 2;
* When 42% ≤ the ratio R of vehicle stop time in 10 minutes < 46%, the driving environment index P1 is set to a value 3; and
* When the ratio R of vehicle stop time in 10 minutes ≥ 46%, the driving environment index P1 is set to a value 4.

The above reference values 38%, 42% and 46% are only illustrative and not restrictive but may be replaced with other numerical values. The settings of the driving environment index P1 are not limited to the four values 1 to 4 but may be any other suitable count of values, for example, three values, five values or six values. In general, the suburban area has the lower driving environment index P1, and the urban area has the higher driving environment index P1, so that the higher driving environment index P1 indicates the higher degree of urbanization.

The embodiment determines the driving environment index P1 based on the wheel speed Vh detected by the wheel speed sensor 82, but the invention is not limited to this configuration. For example, the driving environment index P1 may be determined, based on an average value of vehicle speed detected by a vehicle speed sensor, a variation in wheel speed Vh (acceleration) detected by the wheel speed sensor 82, a gear position of a manual transmission in an MT (manual transmission) vehicle or a gear ratio of an automatic transmission in an AT (automatic transmission) vehicle. The lower average value of the vehicle speed indicates the higher degree of urbanization, so that the higher value is set to the driving environment index P1 at the lower average value of vehicle speed. The higher variation in wheel speed Vh indicates the higher degree of urbanization, so that the higher value is set to the driving environment index P1 at the higher variation in wheel speed Vh. The higher frequency of shift in gear position of the manual transmission indicates the higher degree of urbanization, so that the higher value is set to the driving environment index P1 at the higher frequency of shift in gear position of the manual transmission. The higher frequency of change in gear ratio of the automatic transmission indicates the higher degree of urbanization, so that the higher value is set to the driving environment index P1 at the higher frequency of change in gear ratio of the automatic transmission.

The driving environment index P1 may not be necessarily determined based on only one parameter selected among the wheel speed Vh and the respective parameters in place of the wheel speed Vh described above, but may be determined based on two or more of these parameters. In the application using two or more parameters, it is preferable to determine the driving environment index P1 by multiplying the respective parameters by individual weighting factors. Using the wheel speed Vh and the respective parameters in place of the wheel speed Vh described above enables the driving environment to be predicted only in the autonomous system, i.e., the automobile 200. Alternatively the driving environment index P1 may be determined, based on information obtained from outside of the autonomous system. The information obtained from outside of the autonomous system is, for example, road map information of the navigation system. This application may identify whether a future driving area is an urban area or a suburban area based on the road map information of the navigation system and determine the driving environment index P1. In a vehicle equipped with a revolutionary information communication system like VICS (registered trademark: Vehicle Information and Communication System) which receives traffic information such as traffic congestion and traffic restriction in real time and displays the received traffic information on an in-vehicle machine, for example, an automotive navigation system, in the form of characters or figures, the driving environment index P1 may be determined, based on the traffic information such as traffic congestion and traffic restriction, received by the information communication system.

The vehicle state predictor 114 predicts the state of the automobile 200 (vehicle state). The "vehicle state" herein is a parameter indicating how much SOC the automobile 200 is expected to consume hereafter. More specifically, the vehicle state predictor 114 calculates the amount of electric power consumed by the auxiliary machinery 70 based on the battery current Ab detected by the battery current sensor 88 and an alternator current Aa detected by the alternator current sensor 89 and outputs the calculated amount of electric power as a vehicle state P2. The SOC consumption rate increases with an increase in amount of electric power consumed by the auxiliary machinery 70. According to the embodiment, the vehicle state predictor 114 thus predicts the amount of electric power consumed by the auxiliary machinery 70 as the vehicle state P2.

The embodiment predicts the vehicle state P2 based on the amount of electric power consumed by the auxiliary machinery 70, but the invention is not limited to this configuration. For example, the vehicle state P2 may be predicted, based on air-conditioning information (for example, a difference between a target temperature and vehicle interior temperature) relating to the power consumption of the air-conditioner (A/C) or based on information regarding the engine warm-up state such as a difference between engine water temperature and ambient temperature. The invention is not limited to the configuration of predicting the vehicle state P2 based on one parameter selected among the amount of electric power consumed by the auxiliary machinery 70, the air-conditioning information and the warm-up state information, but may be implemented by a configuration that determines the vehicle state P2 based on two or more parameters. In the case of using two or more parameters, the application is preferably configured to predict the vehicle state P2 by multiplying the respective parameters by individual weighting factors.

Moreover, each of the configurations described above determines the current operating state of the auxiliary machinery based on the currently detected sensor signals and regards the current operating state as the future vehicle state. An alternative configuration may read a sign of change in operating state from the current operating state determined as described above, so as to predict the future vehicle state.

The driving environment predictor 112 and the vehicle state predictor 114 of the above configuration continually perform the predictions after the automobile 200 starts operation. The respective components 122 to 124 are actually implemented by the CPU included in the ECU 50 executing the computer programs stored in the ROM. The driving environment index P1 predicted by the driving environment predictor 112 and the vehicle state P2 predicted by the vehicle state predictor 114 are sent to an SOC distribution request level calculator 116.

The SOC distribution request level calculator 116 calculates an SOC distribution request level P3 based on the driving environment index P1 and the vehicle state P2. The target SOC value calculator 118 calculates a target SOC value C1 based on the SOC distribution request level P3. The following describes the detailed processes of the SOC distribution request level calculator 116 and the target SOC value calculator 118.

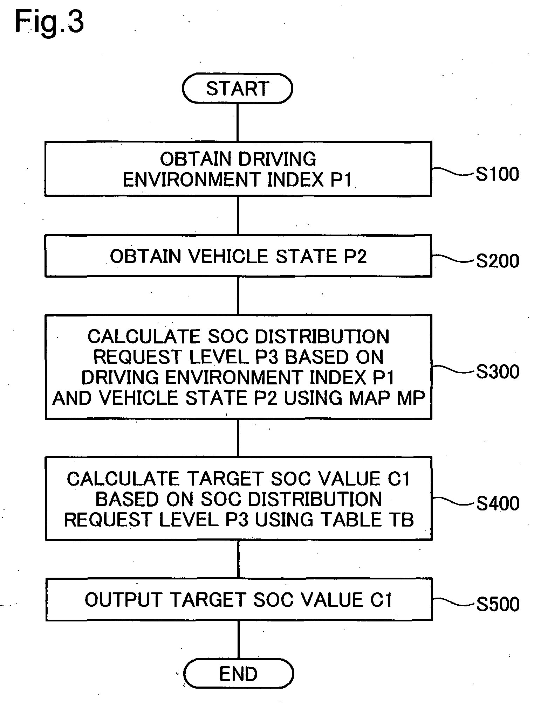

Fig. 3 is a flowchart showing a target SOC estimation routine. This target SOC estimation routine is performed repeatedly at predetermined time intervals (for example, 60 sec) during vehicle running. In other words, the target SOC estimation routine is not performed during a stop of the engine 10 by idle reduction control. As illustrated, when the process flow starts, the CPU of the ECU 50 obtains the driving environment index P1 predicted by the driving environment predictor 112 (Fig. 2) (step S100) and also obtains the vehicle state P2 predicted by the vehicle state predictor 114 (Fig. 2) (step S200).

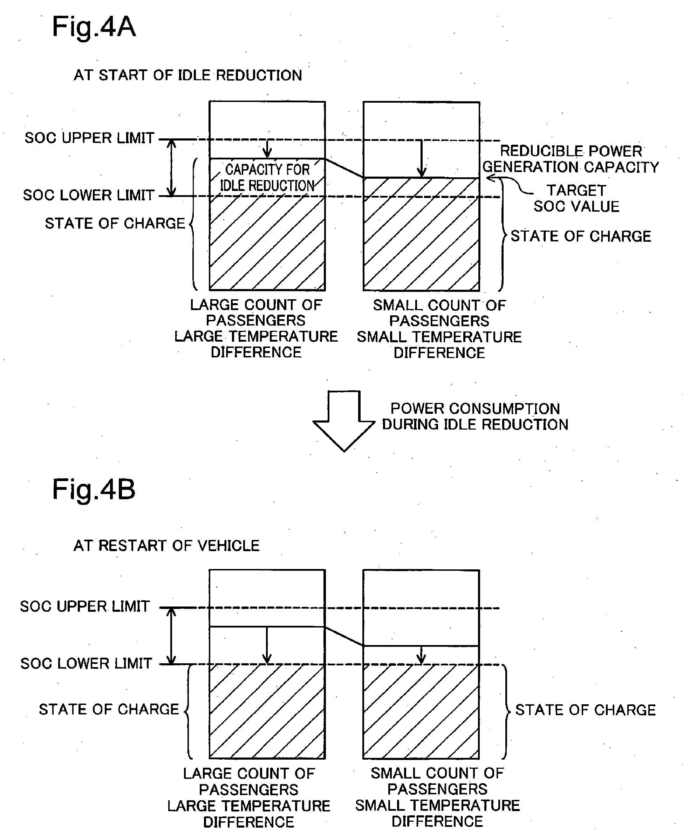

Fig. 4A and 4B are diagrams schematically illustrating the target SOC. The target SOC is a value obtained by adding a capacity for idle reduction to an SOC lower limit. The capacity for idle reduction shows electric power consumed by the vehicle until the engine is restarted to start the vehicle after the vehicle stops to stop the engine to be in the state of idle reduction. The air conditioner 74 is generally the main power-consuming component during idle reduction. When the state of charge of the battery 40 decreases below the SOC lower limit during idle reduction, the ECU 50 restarts the engine 10 to charge the battery 40 in the idling state. It is accordingly preferable that the capacity for idle reduction is set not to cause the state of charge of the battery 40 to decrease below the SOC lower limit. Passengers in the vehicle are heat-generating bodies. An increase in a count of passengers in the vehicle increases the amount of power consumption. An increase in temperature difference between the vehicle interior temperature and the set temperature of the air conditioner 74 also increases the amount of power consumption. It is accordingly preferable to correct the vehicle state P2 according to the temperature difference between the vehicle interior temperature and the set temperature of the air conditioner 74 and the count of passengers in the vehicle.

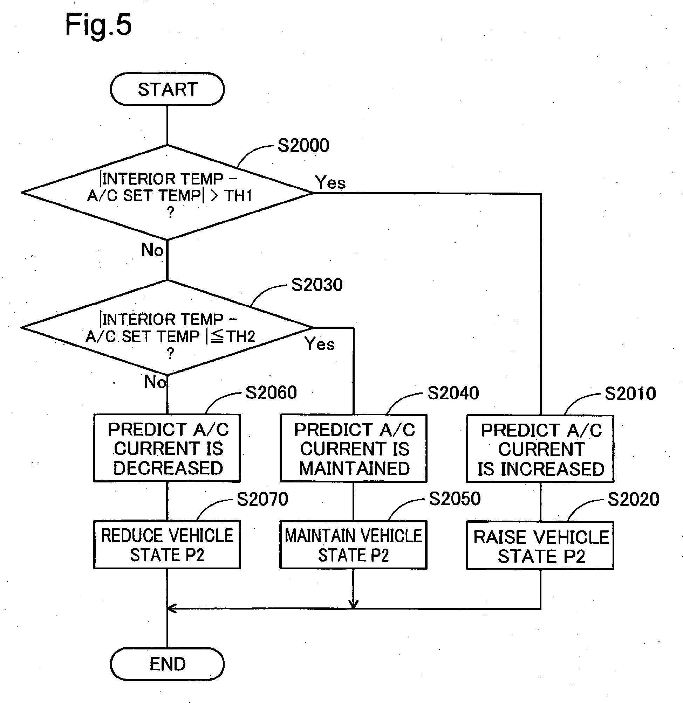

Fig. 5 is a diagram showing a flowchart of correcting the vehicle state P2 based on the temperature difference between the vehicle interior temperature and the set temperature of the air conditioner 74. At step S2000, the ECU 50 determines whether the difference between the vehicle interior temperature and the set temperature of the air conditioner 74 is greater than a reference value TH1. When the difference between the vehicle interior temperature and the set temperature of the air conditioner 74 is greater than the reference value TH1, the ECU 50 proceeds to step S2010 to predict that the electric current consumed by the air conditioner 74 is increased and raises the vehicle state P2 (step S2020). When the difference between the vehicle interior temperature and the set temperature of the air conditioner 74 is not greater than the reference value TH1, on the other hand, the ECU 50 proceeds to step S2030 to subsequently determine whether the difference between the vehicle interior temperature and the set temperature of the air conditioner 74 is equal to or less than a reference value TH2 (TH2 < TH1). When the difference between the vehicle interior temperature and the set temperature of the air conditioner 74 is equal to or less than the reference value TH2, the ECU 50 proceeds to step S2040 to predict that the electric current consumed by the air conditioner 74 is unchanged (maintained) and maintains the vehicle state P2 (step S2050). When the difference between the vehicle interior temperature and the set temperature of the air conditioner 74 is not equal to or less than the reference value TH2, on the other hand, the ECU proceeds to step S2060 to predict that the electric current consumed by the air conditioner 74 is decreased and reduces the vehicle state P2 (step S2070).

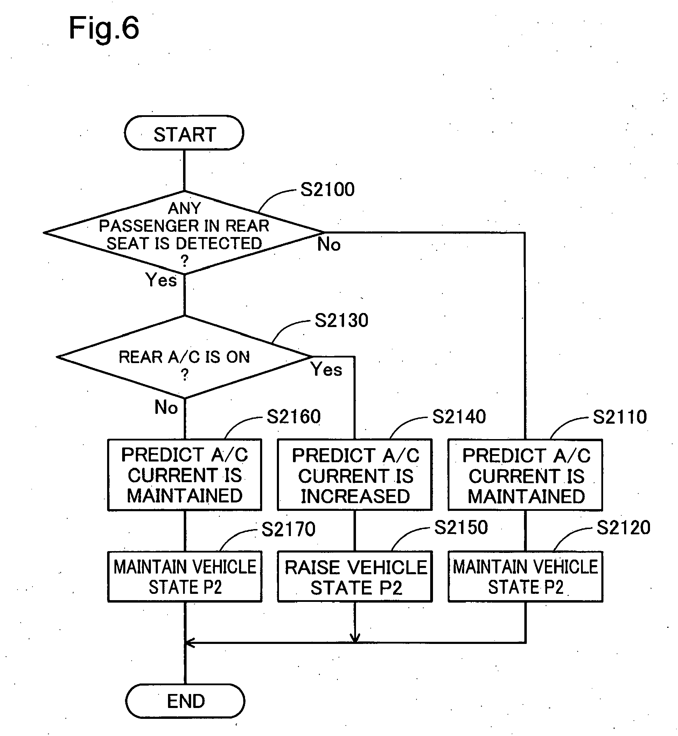

Fig. 6 is a diagram showing a flowchart of correcting the vehicle state P2 based on the count of passengers. At step S2100, the ECU 50 determines whether any passenger is seated on a rear seat. The ECU 50 may make this determination, based on a signal from the seat sensor 90 for the rear seat. The ECU 50 may also make this determination, based on a signal from the seatbelt sensor 94 for the rear seat. The ECU 50 may also make this determination by human recognition using an image of the camera 96.

When there is no passenger seated on the rear seat, the ECU 50 proceeds to step S2110 to predict that the electric current consumed by the air conditioner 74 is maintained and maintains the vehicle state P2 (step S2120). When there is any passenger seated on the rear seat, on the other hand, the ECU 50 proceeds to step S2130 to determine whether the rear air conditioner unit 74r is switched on. When the rear air conditioner unit 74r is switched on, the ECU 50 proceeds to step S2140 to predict that the electric current consumed by the air conditioner 74 (front air conditioner unit 74f and rear air conditioner unit 74r) is increased and raises the vehicle state P2 (step S2150). When the rear air conditioner unit 74r is not switched on (but is kept off), the ECU 50 proceeds to step S2160 to predict that the electric current consumed by the air conditioner 74 is not increased (but is maintained) and maintains the vehicle state P2 (step S2170).

With respect to Figs. 5 and 6, in some cases, none of the air conditioner units 74 is operated. In such cases, the ECU 50 may not necessarily perform the flowcharts of Figs. 5 and 6. Since there is no power consumption by the air conditioner 74, the vehicle state P2 is corrected to be reduced.

Referring back to Fig. 3, After execution of step S200, the CPU calculates an SOC distribution request level based on the driving environment index P1 and the vehicle state P2 by using an SOC distribution request level calculation map MP (step S300). The available SOC range is set for each type of battery as described above. The procedure of the embodiment distributes the available SOC range into an SOC range for idle reduction and an SOC range for charge control. The "SOC distribution request level" herein is a parameter specifying the level of the above distribution.

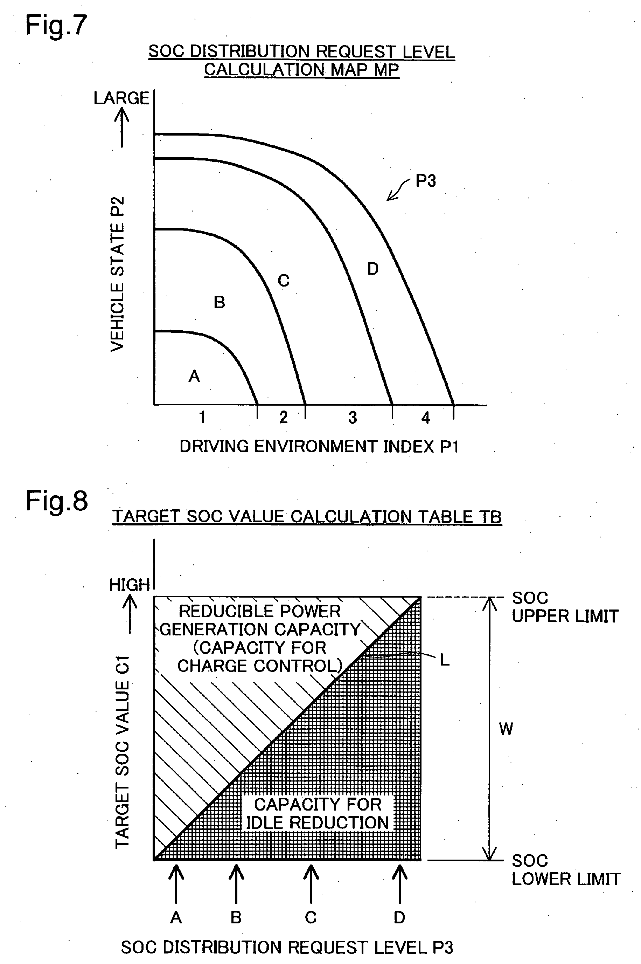

Fig. 7 is a diagram illustrating the SOC distribution request level calculation map MP. As illustrated, the SOC distribution request level calculation map MP has the driving environment index P1 as abscissa and the vehicle state P2 as ordinate and stores map data to map the SOC distribution request level P3 related to the value on the abscissa and the value on the ordinate. The SOC distribution request level calculation map MP is created by determining the relationship of the SOC distribution request level P3 to the driving environment index P1 and the vehicle state P2 in advance experimentally or by simulation and is stored in the ROM. The process of step S300 reads the SOC distribution request level calculation map MP from the ROM and refers to this map MP to obtain the SOC distribution request level P3 related to the driving environment index P1 obtained at step S100 and the vehicle state P2 obtained at step S200. In the illustrated example, four value, A, B, C and D are provided as the SOC distribution request level P3. The values descend in the order of D, C, B and A. The driving environment index P1 equal to the value 1 representing the urban area has the higher SOC distribution request level P3, compared with the driving environment index P1 equal to the value 0 representing the suburban area. Additionally, the SOC distribution request level P3 increases with an increase in vehicle state P2. The SOC distribution request level P3 increases with an increase in the driving environment index P1 and with an increase in the vehicle state P2.

Referring back to Fig. 3, after execution of step S300, the CPU calculates the target SOC value C1 based on the SOC distribution request level P3 by using a target SOC value calculation table TB (step S400).

Fig. 8 is a diagram illustrating the target SOC calculation table TB. As illustrated, the target SOC value calculation table TB has the SOC distribution request level P3 as abscissa and the target SOC value C1 as ordinate and shows the relationship of the target SOC value C1 to the SOC distribution request level P3 by a linear line L. The target SOC value calculation table TB is created by determining the relationship of the target SOC value C1 to the SOC distribution request level P3 in advance experimentally or by simulation and is stored in the ROM. The process of step S400 reads the target SOC value calculation table TB from the ROM and refers to this table TB to obtain the target SOC value C1 related to the SOC distribution request level P3 calculated at step 5300.

As illustrated, the target SOC value C1 shown by the linear line L is a value set in an available SOC range W of the battery 40 and indicates a distribution rate when the available SOC range W is distributed into a reducible power generation capacity and a capacity for idle reduction. More specifically, the area of the capacity for idle reduction is set on the lower side of the available SOC range W of the battery 40, and the area of the reducible power generation capacity is set on the upper side. The boundary between these two areas shows the target SOC value C1. In other words, the level determined by adding the capacity for idle reduction to the lower limit of the available SOC range W is set as the target SOC value C1. Even when the ECU 50 reduces the amount of power generation of the alternator 35 by the reducible power generation capacity, the state of charge of the battery 40 does not decrease below the SOC lower limit during idle reduction. This accordingly prevents the engine 10 from being restarted by a start of idling and thereby reduces fuel consumption.

The reducible power generation capacity denotes the amount of electric power reducible by reduction of power generation as the result of charge control described above and is also called "capacity for charge control". The capacity for idle reduction is a capacity expected to be used in the future stop and start period. According to this embodiment, the capacity for idle reduction is set to an expected maximum capacity. The capacity for idle reduction increases with an increase in SOC distribution request level P3. When the SOC is controlled to the upper side of the linear line L, the remaining capacity corresponding to the SOC in the available SOC range exceeds the capacity for idle reduction. This causes the idle reduction control to be fully implemented but further has an excess corresponding to the exceeding capacity. The target SOC value C1 shown by the linear line L accordingly indicates the SOC that enables idle reduction control to be fully implemented hereafter and minimizes the amount of power generation for accumulation of SOC. A decrease of this surplus more effectively suppresses deterioration of the battery 40 and further increases the battery life.

The target SOC value C1 linearly increases with an increase in SOC distribution request level P3 as shown by the linear line L. The invention is, however, not limited to this example. For example, the target SOC value C1 may be configured to linearly increase with an increase in SOC distribution request level P3 when the SOC distribution request level P3 is equal to or less than a predetermined value and to maintain a fixed value when the SOC distribution request level P3 is greater than the predetermined value. This configuration is effective for a battery having a relatively narrow available SOC range. Additionally, a change in target SOC value C1 may be shown by a curved line, instead of the linear line.

Referring back to Fig. 3, after execution of step S400, the CPU outputs the target SOC value C1 calculated at step S400 to the feedback controller 130 (step S500) and subsequently terminates the target SOC estimation routine. The feedback controller 130 (Fig. 2) controls the present SOC value C2 to the calculated target SOC value C1. The present SOC value C2 indicates the remaining capacity in the available SOC range of the battery 40. The control described above results in preventing the remaining capacity from becoming less than the capacity for idle reduction during vehicle running. More specifically, when the present SOC value is located in the area of the capacity for charge control in Fig. 8, i.e., when the remaining capacity is greater than the capacity for idle reduction, the ECU 50 performs charge control and does not actuate the alternator 35, so as to suppress charging into the batter 40. In this case, no torque is needed to actuate the alternator 35. This accordingly reduces fuel consumption of the engine 10. When the SOC decreases and is becoming less than the capacity for idle reduction, the SOC is controlled to the target SOC value C1 shown by the linear line L by fuel power generation. Such control accordingly prevents the SOC from becoming less than the capacity for idle reduction.

### D. Operation and Effects

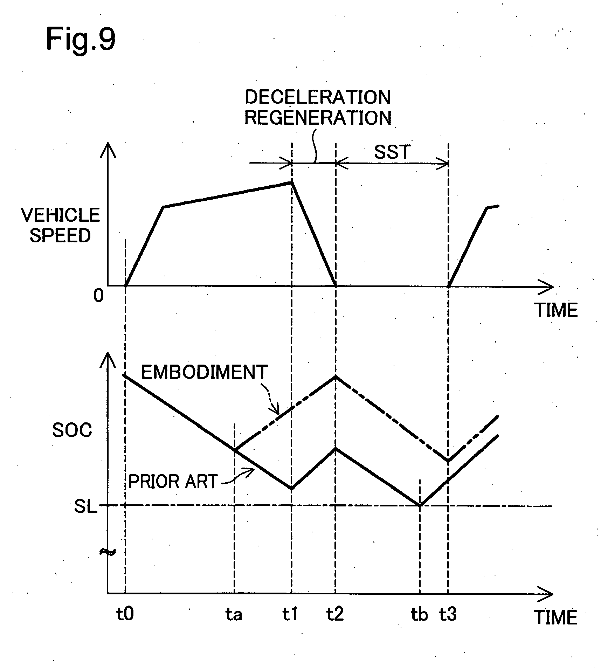

Fig. 9 is a diagram illustrating time charts of vehicle speed and SOC (present SOC value C2) of the battery 40 during operation of the automobile 200. The time charts have the vehicle speed and the SOC as the ordinate and the time as the abscissa. When the operation of the automobile 200 is started and the automobile 200 starts moving at a time t0, the vehicle speed gradually increases to normal running. The vehicle then shifts to the deceleration state at a time t1. In a t0-t1 period from the time t0 to the time t1, the SOC gradually decreases as shown by the solid line. This solid line, however, indicates a change according to the prior art, and this embodiment has a change as shown by the two-dot chain line. This is described below.

After the time t1, the vehicle stops at a time t2. In a t1-t2 period, the SOC gradually increases as shown by the solid line by regenerative power generation during deceleration. A period from the time t2 (more specifically, at the time when the engine stop condition is satisfied) to a time t3 when the vehicle speed has a rise is a stop and start period SST, when the engine 10 is at stop. In the stop and start period SST, the SOC gradually decreases by power consumption of the auxiliary machinery. According to the prior art, as shown by the solid line, when the SOC decreases to a lower limit SL during this engine stop (time tb), battery control is performed to restart the engine 10. After the engine restart, the SOC increases by power generation using the power of the engine 10, as shown by the solid line.

According to the embodiment, when the SOC decreases during normal running and causes the remaining capacity in the available SOC range of the battery 40 to become less than the capacity for idle reduction (time ta), the SOC is increased by fuel power generation. As shown by the two-dot chain line in illustration, the SOC increases in a ta-t2 period. This increase is in view of the maximum battery capacity expected to be used in the future stop and start period, so that the SOC decreasing in the stop and start period t2-t3 does not reach the lower limit SL. The "future stop and start period" is not limited to one stop and start period SST as illustrated but includes all a plurality of stop and start periods within a predetermined time period.

According to the embodiment, the engine 10 is not restarted in the state that the SOC decreases to the lower limit in the stop and start period t2-t3, unlike the prior art. An engine restart due to shortage of SOC in the middle of the stop and start period requires 3 times to even 5 times the amount of fuel required in the case of an increase in power during operation of the engine to increase the SOC. In other words, the fuel consumption effect per unit SOC (for example, 1% SOC) during, engine operation is three times to five times better than that in the case of an engine restart due to shortage of SOC in the middle of the stop and start period. The automobile 200 of the embodiment accordingly improves the fuel consumption, compared with the prior art.

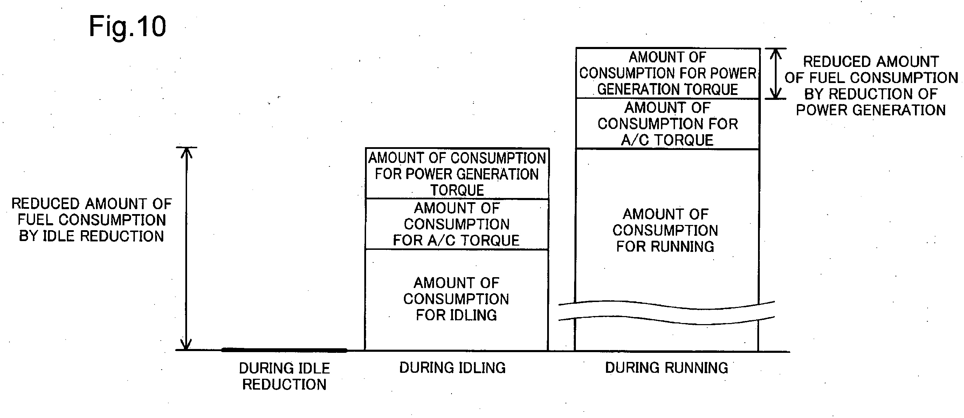

Fig. 10 is a diagram illustrating the effect of increasing the capacity for idle reduction. During running, reduction of power generation reduces the amount of fuel consumption for the torque used to actuate the alternator 35 (Fig. 1) (amount of consumption for power generation torque in Fig. 10). The engine is also involved in actuation of the air conditioner 74. This accordingly does not reduce the amount of fuel consumption for the torque used to actuate the air conditioner 74 (amount of consumption for A/C torque in Fig. 10). During idle reduction, on the other hand, the engine 10 is not rotated. Idle reduction thus reduces the amount of fuel consumption for the torque used to actuate the alternator 35 (amount of consumption for power generation torque) and the amount of fuel consumption for the torque used to actuate the air conditioner 74 (amount of consumption for A/C torque), in addition to the amount of fuel consumption needed to rotate the engine 10 (amount of consumption for idling). Increasing the capacity for idle reduction to some extent accordingly results in reducing the fuel consumption of the vehicle.

### E. Modifications

The present invention is not limited to the embodiment or aspects described above but may be implemented by various other aspects within the scope of the invention. Some examples of possible modifications are given below.

### * Modification 1

The above embodiment determines the SOC distribution request level P3, based on the driving environment index P1 and the vehicle state P2. Alternatively, the configuration may be modified to provide a dial operated by the driver on an instrument panel (not shown) of the automobile 200 and determine the SOC distribution request level P3 according to the operating amount of the dial setting. For example, when going from a suburban area to an urban area, the driver may change over the dial setting to "high" to increase the SOC distribution request level P3, so as to increase the target SOC value or the distribution ratio of the capacity for idle reduction. This modified configuration causes the maximum SOC used during the stop and start period to be set with high accuracy according to the driving environment, when the driver is capable of knowing a future driving area and setting the SOC distribution request level. The dial setting may be changed over between two stages, "high" and "low" or may be changed over in three or more stages. The dial may be replaced with another input means such as a switch. Additionally, instead of determining the SOC distribution request level P3 according to only the operating amount of the dial setting, the modified configuration may correct the SOC distribution request level P3, which is calculated from the driving environment index P1 and the vehicle state P2 as described in the above embodiment, based on the operating amount of the dial setting.

### * Modification 2

The above embodiment is configured to determine the SOC distribution request level P3 based on the driving environment index P1 and the vehicle state P2 and calculate the target SOC based on the SOC distribution request level P3. Alternatively, the configuration may be modified to directly calculate the target SOC, based on the driving environment index P1 and the vehicle state P2. More specifically, the configuration may be modified to directly calculate a distribution ratio of the available SOC range of the battery to the capacity for charge control and the capacity for idle reduction, based on the driving environment index P1 and the vehicle state P2. Similarly, in Modification 1 described above, the target SOC value may be calculated directly, based on the operating amount of the dial setting.

### * Modification 3

The above embodiment calculates the SOC distribution request level P3, based on both the driving environment index P1 and the vehicle state P2. Alternatively, the SOC distribution request level P3 may be calculated, based on either one of the driving environment index P1 and the vehicle state P2.

### * Modification 4

In the above embodiment, the battery is a lead acid battery. The invention is, however, not limited to this type of battery but may be applied to any of various other types of batteries, such as lithium ion battery and rocking chair-type battery. In the above embodiment, the vehicle is an automobile. Alternatively the invention may be applied to a vehicle other than automobile, such as train.

### * Modification 5

Part of the functions configured by the software in the above embodiment may be configured by hardware (for example, integrated circuit), or part of the functions configured by the hardware may be configured by software.

### * Modification 6

Among components in the embodiment and the respective modifications described above, components other than those described in independent claims are additional components and may be omitted as appropriate. For example, a modification may omit charge control which suppresses the battery from being charged during normal running to save the amount of fuel consumption and charges the battery by regenerative power generation during deceleration running.

The embodiments and their modified examples are described for the better understanding of the invention and are to be considered in all aspects as illustrative and not restrictive. There may be many modifications, changes, and alterations without departing from the scope or spirit of the main characteristics of the present invention. All such modifications and changes that come within the meaning and range of equivalency of the claims are to be embraced within their scope.

### Reference Signs List

- 10: Engine
- 15: Automatic transmission
- 20: Differential gear
- 25: Drive wheels
- 30: Starter
- 34: Drive mechanism
- 35: Alternator
- 40: Battery
- 50: ECU
- 70: Auxiliary machinery
- 72: Headlights
- 74: Air conditioner
- 74f: Front air conditioner unit
- 74r: Rear air conditioner unit
- 78: Air conditioner switch
- 82: Wheel speed sensor
- 84: Brake pedal sensor
- 86: Accelerator opening sensor
- 88: Battery current sensor
- 89: Alternator current sensor
- 90: Idle reduction controller
- 92: Seat sensor
- 94: Seatbelt sensor
- 96: Camera
- 98: Vehicle interior temperature sensor
- 100: SOC value controller
- 110: Target SOC value estimator
- 112: Driving environment predictor
- 114: Vehicle state predictor
- 116: SOC distribution request level calculator
- 118: Target SOC value calculator
- 120: Battery SOC value calculator
- 130: Feedback controller
- 200: Automobile

## Claims

1. A vehicle control device **(50)** of a vehicle **(200),** the vehicle **(200)** comprising an engine **(10),** a battery **(40)** chargeable with electric power generated by a generator **(35)** driven with power of the engine **(10),** and two or more air conditioner units **(74f, 74r)** operable with electric power of the battery **(40),** the vehicle control device **(50)** comprising:
a power consumption prediction device **(114)** that predicts an amount of electric power consumed by a vehicle;
an idle reduction controller **(90)** that performs idle reduction control of the engine;
an SOC detector **(120)** that detects a state of charge **(SOC)** of the battery **(40);**
a power amount setter **(110)** that sets during running of the vehicle an amount of power for idle reduction, which is predicted to be used during a stop and start period from an engine stop to an engine restart by the idle reduction control, based on the power consumption of the air conditioner units **(74f, 74r)** predicted by the power consumption prediction device **(114);** and
an SOC controller **(100)** that controls charging of the battery **(40)** with the electric power of the generator **(35)** during running of the vehicle **(200)** to prevent a remaining amount of power as a difference between the SOC detected by the SOC detector **(120)** and a lower limit of an available SOC range from decreasing below the amount of power for idle direction; wherein
the power consumption prediction device **(114)** comprising:
a passenger count detector **(50)** that detects count of passengers in the vehicle **(200);**
an active air conditioner unit count detector **(50)** that detects a count of active air conditioner units in the vehicle **(200);**
a vehicle interior temperature detector **(98)** that detects a vehicle interior temperature of the vehicle **(200);**
an air conditioner unit set temperature acquirer **(78)** that obtains a set temperature of each of the air conditioner units **(74f, 74r);** and
a power consumption predictor **(114)** that predicts power consumption of the air conditioner units **(74f, 74r)** during idle reduction of the engine **(10),** the predicting power consumption being performed when the vehicle is running prior to the idle reduction, by using the count of passengers, the count of active air conditioner units **(74f, 74r),** the vehicle interior temperature and the set temperature of each air conditioner unit; wherein
the SOC controller **(100)** is configured to:
(**a**) calculate a level of a vehicle state based on the predicted power consumption of the vehicle;
**(b)** calculate a driving environment index using at least one of:
**(i)** a calculated vehicle stop time rate of the vehicle during a predetermined latest time period; and
**(ii)** at least one of a vehicle average speed, an acceleration and a frequency of gearshifts of a transmission; and
**(c)** calculate an SOC target value **(C1)** using the level of the vehicle state **(P2)** and the driving environment index **(P1)** to control charging of the battery **(40)** with the electric power of the generator **(35).**

2. The vehicle control device according to claim 1, wherein
the passenger count detector **(50)** uses a seat sensor **(92)** provided in each seat of the vehicle to detect the count of passengers.

3. The vehicle control device according to claim 2, wherein
the seat sensor is a seatbelt sensor **(94)** provided in the seat.

4. The vehicle control device according to claim 1, wherein
the vehicle has an imaging device **(96),** and
the passenger count detector **(50)** uses an image taken by the imaging device to detect the count of passengers.

5. The vehicle control device according to either claim 2 or claim 3, further comprising:
an air conditioner unit controller **(50)** that identifies passenger positions using the seat sensor **(92)** and controls on and off of each of the air conditioner units **(74f, 74r)** based on the passenger positions.

6. The vehicle control device according to any one of claims 1 to 5, wherein
the active air conditioner unit count detector **(50)** that detects the count of active air conditioner units **(74f, 74r)** using a switch-on count and a switch-off count of the air conditioner units **(74f, 74r).**

7. The vehicle control device **(50)** according to any one of claim 1 to 6, further comprising:
a regenerative power amount predictor **(50)** that predicts an amount of regenerative electric power regenerated during deceleration from a running state of the vehicle to a stop state, wherein
the SOC controller **(100)** controls charging of the battery with the electric power of the generator to prevent a total amount of power as a sum of the remaining amount of power during running and the amount of regenerative electric power from decreasing below the amount of power for idle reduction.

8. The vehicle control device according to any one of claim 1 to 6, wherein
the power amount setter **(110)** comprises a driving environment predictor **(114)** that predicts a driving environment of the vehicle that causes the vehicle to stop, and
the power amount setter sets the amount of power for idle reduction, based on the predicted driving environment.

9. A vehicle **(200),** comprising:
an engine **(10);**
a battery **(40)** that is chargeable with electric power generated by a generator **(35)** driven with power of the engine;
two or more air conditioner units **(74f, 74r)** operable with electric power of the battery; and
the vehicle control device **(50)** according to any one of claims 1 to 7.

10. A vehicle control method of controlling a vehicle **(200),** the vehicle comprising an engine **(10),** a battery **(40)** chargeable with electric power generated by a generator **(35)** driven with power of the engine, and two or more air conditioner units **(74f, 74r)** operable with electric power of the battery, the vehicle control method comprising:
**(a)** predicting an amount of electric power consumed by the vehicle;
**(b)** performing idle reduction control;
**(c)** detecting a state of charge **(SOC)** of the battery;
**(d)** predicting an amount of power consumed by the air conditioner units during idle reduction of engine as an amount of power for idle reduction, the predicting the amount of power consumption being performed when the vehicle is running, using a result of the **(a);** and
**(e)** controlling charging of the battery with the electric power of the generator during running of the vehicle to prevent a remaining amount of power as a difference between the SOC detected in **(c)** and a lower limit of an available SOC range from decreasing below the amount of power for idle direction; wherein
the **(a)** comprising:
**(a-1)** detecting a count of passengers in the vehicle;
**(a-2)** detecting a count of active air conditioner units in the vehicle;
**(a-3)** detecting a vehicle interior temperature of the vehicle;
**(a-4)** obtaining a set temperature of each of the air conditioner units; and
**(a-5)** predicting power consumption of the air conditioner units during idle reduction of the engine, the predicting power consumption being performed when the vehicle is running prior to the idle reduction, by using the count of passengers, the count of active air conditioner units, the vehicle interior temperature and the set temperature of each air conditioner unit; wherein
the **(e)** comprising:
**(e-1)** calculating a level of a vehicle state based on the predicted power consumption of the vehicle;
**(e-2)** calculating a driving environment index using at least one of:
**(i)** a calculated vehicle stop time rate of the vehicle during a predetermined latest time; and
**(ii)** at least one of a vehicle average speed, an acceleration and a frequency of gearshifts of a transmission; and
**(e-3)** calculating an SOC target value using the level of the vehicle state and the driving environment index to control charging of the battery with the electric power of the generator.

## Patentansprüche

1. Fahrzeugsteuerungsvorrichtung (50) eines Fahrzeugs (200), wobei das Fahrzeug eine Kraftmaschine (10), eine Batterie (40), die mit elektrischer Leistung ladbar ist, die durch einen mit Leistung der Kraftmaschine (10) angetriebenen Generator (35) erzeugt wird, und zwei oder mehr Klimaanlageneinheiten (74f, 74r) aufweist, die mit elektrischer Leistung der Batterie (40) betreibbar sind, wobei die Fahrzeugsteuerungsvorrichtung (50) aufweist:
eine Leistungsverbrauchsvorhersageeinrichtung (114), die eine Größe elektrischer Leistung vorhersagt, die durch ein Fahrzeug verbraucht wird,
eine Leerlaufreduzierungssteuerungseinrichtung (90), die eine Leerlaufreduzierungssteuerung der Kraftmaschine durchführt,
eine Ladezustandserfassungseinrichtung (120), die einen Ladezustand (SOC) der Batterie (40) erfasst,
eine Leistungsgrößeneinstellungseinrichtung (110), die während des Fahrens des Fahrzeugs eine Leistungsgröße zur Leerlaufreduzierung, deren Verwendung während einer Start- und Stoppperiode von einem Kraftmaschinenstopp bis zu einem Kraftmaschinenneustart vorhergesagt wird, auf der Grundlage des Leistungsverbrauchs der Klimaanlageneinheiten (74f, 74r) einstellt, der durch die Leistungsverbrauchsvorhersageeinrichtung (114) vorhergesagt wird, und
einer Ladezustandssteuerungseinrichtung (100), die ein Laden der Batterie (40) mit elektrischer Leistung des Generators (35) während des Fahrens des Fahrzeugs (200) steuert, um zu vermeiden, dass eine Restgröße von Leistung als eine Differenz zwischen dem durch die Ladezustandserfassungseinrichtung (120) erfassten Ladezustand und einer unteren Grenze eines verfügbaren Ladezustandsbereichs sich auf unterhalb der Leistungsgröße zur Leerlaufreduzierung verringert, wobei
die Leistungsverbrauchsvorhersageeinrichtung (114) aufweist:
eine Passagieranzahlerfassungseinrichtung (50), die die Anzahl der Passagiere in dem Fahrzeug (200) erfasst,
eine Aktiv-Klimaanlageneinheitszahlerfassungseinrichtung (50), die eine Anzahl aktiver Klimaanlageneinheiten in dem Fahrzeug (200) erfasst,
eine Fahrzeuginnentemperaturerfassungseinrichtung (98), die eine Fahrzeuginnentemperatur des Fahrzeugs (200) erfasst,
eine Klimaanlageneinstellungstemperatur-Beschaffungseinrichtung (78), die eine eingestellte Temperatur von jeder der Klimaanlageneinheiten (74f, 74r) erhält, und
einer Leistungsverbrauchsvorhersageeinrichtung (144), die einen Leistungsverbrauch der Klimaanlageneinheiten (74f, 74r) während einer Leerlaufreduzierung der Kraftmaschine (10) vorhersagt, wobei die Leistungsverbrauchsvorhersage bei Fahren das Fahrzeugs vor der Leerlaufreduzierung durchgeführt wird, indem die Anzahl der Passagiere, die Anzahl aktiver Klimaanlageneinheiten (74f, 74r), die Fahrzeuginnentemperatur und die eingestellte Temperatur jeder Klimaanlageneinheit verwendet werden, wobei
die Ladezustandssteuerungseinrichtung konfiguriert ist:
(a) einen Grad eines Fahrzeugzustands auf der Grundlage des vorhergesagten Leistungsverbrauchs des Fahrzeugs zu berechnen,
(b) einen Fahrumgebungsindex zu berechnen unter Verwendung von zumindest einer von:
(i) einer berechneten Fahrzeugstoppzeitrate des Fahrzeugs während einer vorbestimmten letzten Zeitperiode, und
(ii) einer Fahrzeugdurchschnittsgeschwindigkeit, einer Beschleunigung und/oder einer Häufigkeit von Gangschaltungen eines Getriebes, und
(c) einen Ladezustands-Sollwert (C1) unter Verwendung des Grads des Fahrzeugzustands (P2) und des Fahrumgebungsindexes (P1) zu berechnen, um das Laden der Batterie (40) mit der elektrischen Leistung des Generators (35) zu steuern.

2. Fahrzeugsteuerungsvorrichtung nach Anspruch 1, wobei
die Passagieranzahlerfassungseinrichtung (50) zur Erfassung der Anzahl der Passagiere einen Sitzsensor (92) verwendet, der in jedem Sitz des Fahrzeugs vorgesehen ist.

3. Fahrzeugsteuerungsvorrichtung nach Anspruch 2, wobei
der Sitzsensor eine Sicherheitsgurtsensor (94) ist, der in dem Sitz vorgesehen ist.

4. Fahrzeugsteuerungsvorrichtung nach Anspruch 1, wobei
das Fahrzeug eine Bildgebungsvorrichtung (96) aufweist, und
die Passagieranzahlerfassungseinrichtung (50) ein durch die Bildgebungsvorrichtung aufgenommenes Bild zur Erfassung der Anzahl der Passagiere verwendet.

5. Fahrzeugsteuerungsvorrichtung nach Anspruch 2 oder 3, weiterhin mit
einer Klimaanlagensteuerungseinrichtung (50), die Passagierpositionen unter Verwendung des Sitzsensors (92) identifiziert und Ein und Aus von jeder der Klimaanlageneinheiten (74f, 74r) auf der Grundlage der der Passagierposition steuert.

6. Fahrzeugsteuerungsvorrichtung nach einem der Ansprüche 1 bis 5, wobei
die Aktiv-Klimaanlageneinheitszahlerfassungseinrichtung (50) die Anzahl der aktiven Klimaanlageneinheiten (74f, 74r) unter Verwendung einer Einschaltanzahl und einer Ausschaltanzahl der Klimaanlageneinheiten (74f, 74r) erfasst.

7. Fahrzeugsteuerungsvorrichtung nach einem der Ansprüche 1 bis 6, weiterhin mit
einer Regenerationsleistungsgrößenvorhersageeinrichtung (50), die eine Größe regenerierter elektrischer Leistung vorhersagt, die während einer Verlangsamung von einem Fahrzustand des Fahrzeugs zu einem Stoppzustand des Fahrzeugs regeneriert wird, wobei
die Ladezustandssteuerungseinrichtung (100) das Laden der Batterie mit der elektrischen Leistung des Generators steuert, um zu verhindern, dass die Gesamtgröße der Leistung als eine Summe der Restgröße der Leistung während des Fahrens und der Größe der regenerativen elektrischen Leistung sich auf unterhalb der Leistungsgröße zur Leerlaufreduzierung verringert.

8. Fahrzeugsteuerungsvorrichtung nach einem der Ansprüche 1 bis 6, wobei
die Leistungsgrößeneinstellungseinrichtung (110) eine Fahrumgebungsvorhersageeinrichtung (114) aufweist, die eine Fahrumgebung des Fahrzeugs vorhersagt, die ein Stoppen des Fahrzeugs veranlasst, und
die Leistungsgrößeneinstellungseinrichtung die Leistungsgröße zur Leerlaufreduzierung auf der Grundlage der vorhergesagten Fahrumgebung einstellt.

9. Fahrzeug (200) mit
einer Kraftmaschine (10),
einer Batterie (40), die mit elektrischer Leistung ladbar ist, die durch einen mit Leistung der Kraftmaschine angetriebenen Generator (35) erzeugt wird,
zwei oder mehr Klimaanlageneinheiten (74f, 74r), die mit elektrischer Leistung der Batterie betreibbar sind, und
der Fahrzeugsteuerungsvorrichtung (50) nach einem der Ansprüche 1 bis 7.

10. Fahrzeugsteuerungsverfahren zur Steuerung eines Fahrzeugs (200), wobei das Fahrzeug eine Kraftmaschine (10), eine Batterie (40), die mit elektrischer Leistung ladbar ist, die durch einen mit Leistung der Kraftmaschine (10) angetriebenen Generator (35) erzeugt wird, und zwei oder mehr Klimaanlageneinheiten (74f, 74r) aufweist, die mit elektrischer Leistung der Batterie (40) betreibbar sind, wobei das Fahrzeugsteuerungsverfahren aufweist:
(a) Vorhersagen einer Größe elektrischer Leistung, die durch ein Fahrzeug verbraucht wird,
(b) Durchführen einer Leerlaufreduzierungssteuerung,
(c) Erfassen eines Ladezustands (SOC) der Batterie,
(d) Vorhersagen einer Leistung, die durch die Klimaanlageneinheiten verbraucht wird, als eine Leistungsgröße zur Leerlaufreduzierung, wobei das Vorhersagen der Größe des Leistungsverbrauchs durchgeführt wird, während das Fahrzeug fährt, unter Verwendung des Ergebnisses von (a), und
(e) Steuern eines Ladens der Batterie mit elektrischer Leistung des Generators während des Fahrens des Fahrzeugs, um zu vermeiden, dass eine Restgröße von Leistung als eine Differenz zwischen dem in (c) erfassten Ladezustand und einer unteren Grenze eines verfügbaren Ladezustandsbereichs sich auf unterhalb der Leistungsgröße zur Leerlaufreduzierung verringert, wobei
(a) aufweist:
(a-1) Erfassen der Anzahl der Passagiere in dem Fahrzeug,
(a-2) Erfassen der Anzahl aktiver Klimaanlageneinheiten in dem Fahrzeug,
(a-3) Erfassen einer Fahrzeuginnentemperatur des Fahrzeugs,
(a-4) Erhalten einer eingestellten Temperatur von jeder der Klimaanlageneinheiten, und
(a-5) Vorhersagen eines Leistungsverbrauchs der Klimaanlageneinheiten während einer Leerlaufreduzierung der Kraftmaschine, wobei die Leistungsverbrauchsvorhersage bei Fahren das Fahrzeugs vor der Leerlaufreduzierung durchgeführt wird, indem die Anzahl der Passagiere, die Anzahl aktiver Klimaanlageneinheiten, die Fahrzeuginnentemperatur und die eingestellte Temperatur jeder Klimaanlageneinheit verwendet werden, wobei
(e) aufweist:
(e-1) Berechnen eines Grads eines Fahrzeugzustands auf der Grundlage des vorhergesagten Leistungsverbrauchs des Fahrzeugs,
(e-2) Berechnen eines Fahrumgebungsindexes unter Verwendung von zumindest einer von:
(i) einer berechneten Fahrzeugstoppzeitrate des Fahrzeugs während einer vorbestimmten letzten Zeitperiode, und
(ii) einer Fahrzeugdurchschnittsgeschwindigkeit, einer Beschleunigung und/oder einer Häufigkeit von Gangschaltungen eines Getriebes, und
(e-3) Berechnen eines Ladezustands-Sollwerts unter Verwendung des Grads des Fahrzeugzustands und des Fahrumgebungsindexes, um das Laden der Batterie mit der elektrischen Leistung des Generators zu steuern.

## Revendications

1. Dispositif de gestion de véhicule (50) d'un véhicule (200), le véhicule (200) comprenant un moteur (10), une batterie (40) chargeable avec l'électricité générée par un générateur (35) entraîné avec l'énergie du moteur (10), et deux unités de climatisation ou plus (74f, 74r) qui peuvent fonctionner avec l'électricité de la batterie (40), le dispositif de gestion de véhicule (50) comprenant :
un dispositif de prédiction de consommation d'énergie (114) qui prédit une quantité d'électricité consommée par un véhicule ;
un contrôleur de réduction du ralenti (90) qui effectue une commande de réduction du ralenti du moteur ;
un détecteur d'état de charge (120) qui détecte un état de charge (SOC) de la batterie (40) ;
un dispositif de réglage de quantité d'énergie (110) qui définit, pendant le fonctionnement du véhicule, une quantité d'énergie pour la réduction du ralenti, qui est prédite comme étant utilisée pendant une période d'arrêt et de démarrage entre un arrêt du moteur et un redémarrage du moteur par la commande de réduction du ralenti, sur la base de la consommation d'énergie des unités de climatisation (74f, 74r) prédite par le dispositif de prédiction de consommation d'énergie (114) ; et
un contrôleur d'état de charge (100) qui contrôle le chargement de la batterie (40) avec l'électricité du générateur (35) pendant le fonctionnement du véhicule (200) afin d'empêcher une quantité restante d'énergie, sous forme de différence entre l'état de charge détecté par le détecteur d'état de charge (120) et une limite inférieure d'une plage d'état de charge disponible, de diminuer en-dessous de la quantité d'énergie pour le ralenti ; dans lequel
le dispositif de prédiction de consommation d'énergie (114) comprenant :
un compteur de passagers (50) qui détecte le nombre de passagers dans le véhicule (200) ;
un compteur de nombre d'unités de climatisation actives (50) qui détecte le nombre d'unités de climatisation actives dans le véhicule (200) ;
un détecteur de température à l'intérieur du véhicule (98) qui détecte la température intérieure du véhicule (200) ;
un dispositif d'acquisition de température définie pour l'unité de climatisation (78), qui obtient une température définie de chacune des unités de climatisation (74f, 74r) ; et
un prédicteur de consommation d'énergie (114) qui prédit la consommation d'énergie des unités de climatisation (74f, 74r) pendant la réduction du ralenti du moteur (10), la prédiction de la consommation d'énergie étant effectuée pendant que le véhicule fonctionne, avant la réduction du ralenti, en utilisant le nombre de passagers, le nombre d'unités de climatisation actives (74f, 74r), la température à l'intérieur du véhicule et la température définie de chaque unité de climatisation ; dans lequel
le contrôleur d'état de charge (100) est configuré pour :
(a) calculer un niveau d'état du véhicule sur la base de la consommation d'énergie prédite du véhicule ;
(b) calculer un indice d'environnement de conduite en utilisant au moins l'un :
(i) d'une période d'arrêt du véhicule calculée pendant une durée prédéterminée ; et
(ii) d'une vitesse moyenne, d'une accélération et d'une fréquence de changement de vitesses d'une transmission du véhicule ; et
(c) calculer une valeur cible d'état de charge (C1) à l'aide du niveau d'état du véhicule (P2) et de l'indice d'environnement de conduite (P1) afin de contrôler le chargement de la batterie (40) avec l'électricité du générateur (35).

2. Dispositif de gestion de véhicule selon la revendication 1, dans lequel
le compteur de passagers (50) utilise un capteur de siège (92) prévu dans chaque siège du véhicule afin de détecter le nombre de passagers.

3. Dispositif de gestion de véhicule selon la revendication 2, dans lequel
le capteur de siège est un capteur de ceinture de sécurité (94) prévu dans le siège.

4. Dispositif de gestion de véhicule selon la revendication 1, dans lequel
le véhicule possède un dispositif d'imagerie (96), et
le compteur de passagers (50) utilise une image prise par le dispositif d'imagerie pour détecter le nombre de passagers.

5. Dispositif de gestion de véhicule selon la revendication 2 ou 3, qui comprend en outre :
un contrôleur d'unité de climatisation (50) qui identifie les positions des passagers à l'aide du capteur de siège (92), et qui active et désactive chacune des unités de climatisation (74f, 74r) sur la base des positions des passagers.

6. Dispositif de gestion de véhicule selon l'une quelconque des revendications 1 à 5, dans lequel
le compteur d'unités de climatisation actives (50) détecte le nombre d'unités de climatisation actives (74f, 74r) à l'aide d'un nombre d'activations et d'un nombre de désactivations des unités de climatisation (74f, 74r).

7. Dispositif de gestion de véhicule (50) selon l'une quelconque des revendications 1 à 6, qui comprend en outre :
un prédicteur de quantité d'énergie régénérative (50) qui prédit une quantité d'électricité régénérative régénérée pendant la décélération entre un état de fonctionnement du véhicule et un état d'arrêt, dans lequel
le contrôleur d'état de charge (100) contrôle le chargement de la batterie avec l'électricité du générateur afin d'empêcher une quantité totale d'énergie, sous forme de somme de la quantité restante d'énergie pendant le fonctionnement et de la quantité d'électricité régénérative, de diminuer au-dessous de la quantité d'énergie pour la réduction du ralenti.

8. Dispositif de gestion de véhicule selon l'une quelconque des revendications 1 à 6, dans lequel
le dispositif de réglage de quantité d'énergie (110) comprend un prédicteur d'environnement de conduite (114) qui prédit un environnement de conduite du véhicule qui provoque l'arrêt du véhicule, et
le dispositif de réglage de quantité d'énergie définit la quantité d'énergie pour la réduction du ralenti, sur la base de l'environnement de conduite prédit.

9. Véhicule (200), qui comprend :
un moteur (10) ;
une batterie (40) chargeable avec l'électricité générée par un générateur (35) entraîné avec l'énergie du moteur ;
deux unités de climatisation ou plus (74f, 74r) qui peuvent fonctionner avec l'électricité de la batterie ; et
le dispositif de gestion de véhicule (50) selon l'une quelconque des revendications 1 à 7.

10. Procédé de gestion de véhicule qui permet de gérer un véhicule (200), le véhicule comprenant un moteur (10), une batterie (40) chargeable avec l'électricité générée par un générateur (35) entraîné avec l'énergie du moteur, et deux unités de climatisation ou plus (74f, 74r) qui peuvent fonctionner avec l'électricité de la batterie, le procédé de gestion de véhicule comprenant :
(a) la prédiction d'une quantité d'électricité consommée par le véhicule ;
(b) l'exécution d'une commande de réduction du ralenti ;
(c) la détection de l'état de charge (SOC) de la batterie ;
(d) la prédiction d'une quantité d'énergie consommée par les unités de climatisation pendant la réduction du ralenti du moteur, sous forme de quantité d'énergie pour la réduction du ralenti, la prédiction de la quantité de consommation d'énergie étant exécutée pendant que le véhicule fonctionne, à l'aide d'un résultat de l'étape (a) ; et
(e) le contrôle du chargement de la batterie avec l'électricité du générateur pendant le fonctionnement du véhicule afin d'empêcher une quantité restante d'énergie, sous forme de différence entre l'état de charge détecté à l'étape (c) et une limite inférieure d'une plage d'état de charge disponible, de diminuer en-dessous de la quantité d'énergie pour le ralenti ; dans lequel
l'étape (a) comprend :
(a-1) la détection d'un nombre de passagers dans le véhicule ;
(a-2) la détection du nombre d'unités de climatisation actives dans le véhicule ;
(a-3) la détection de la température intérieure du véhicule ;
(a-4) l'obtention d'une température définie pour chacune des unités de climatisation ; et
(a-5) la prédiction de la consommation d'énergie des unités de climatisation pendant la réduction du ralenti du moteur, la prédiction de la consommation d'énergie étant effectuée pendant que le véhicule fonctionne, avant la réduction du ralenti, en utilisant le nombre de passagers, le nombre d'unités de climatisation actives, la température à l'intérieur du véhicule et la température définie de chaque unité de climatisation ; dans lequel
l'étape (e) comprend :
(e-1) le calcul d'un niveau d'état du véhicule sur la base de la consommation d'énergie prédite du véhicule ;
(e-2) le calcul d'un indice d'environnement de conduite en utilisant au moins l'un :
(i) d'une période d'arrêt du véhicule calculée pendant une durée prédéterminée ; et
(ii) d'une vitesse moyenne, d'une accélération et d'une fréquence de changement de vitesses d'une transmission du véhicule ; et
(e-3) le calcul d'une valeur cible d'état de charge à l'aide du niveau d'état du véhicule et de l'indice d'environnement de conduite afin de contrôler le chargement de la batterie avec l'électricité du générateur.
